# EUROPÄISCHE PATENTSCHRIFT

(11) **EP 1 628 897 B1**
(45) Veröffentlichungstag und Bekanntmachung des Hinweises auf die Patenterteilung: **17.10.2007**
(21) Anmeldenummer: 04731021.4
(22) Anmeldetag: 04.05.2004
(51) Int. Cl.: B65G 53/12, B65G 53/36

(54) **VORRICHTUNG ZUM KONTINUIERLICHEN EINSPEISEN EINES PULVERF RM IGEN FESTSTOFFS IN EINE PNEUMATISCHE F RDERLEITUNG**
DEVICE FOR CONTINUOUSLY FEEDING A POWDERY SOLID INTO A PNEUMATIC CONVEYING LINE
DISPOSITIF D'ALIMENTATION CONTINUE D'UNE CONDUITE D'ALIMENTATION PNEUMATIQUE, EN SOLIDE PULVERULENT

(30) Priorität: 02.06.2003 LU 91023
(43) Veröffentlichungstag der Anmeldung: 01.03.2006
(73) Patentinhaber: PAUL WURTH S.A., 1122 Luxembourg (LU)
(72) Erfinder: GOEDERT, Paul, L-5651 MONDORF-LES-BAINS (LU); JUNK, Guy, L-9080 ETTELBRÜCK (LU); KROEMMER, Yvan, L-8360 Goetzingen (LU); SCHMIT, Louis, L-1451 LUXEMBOURG (LU)
(74) Vertreter: Schmitt, Armand
(86) Internationale Anmeldenummer: PCT/EP2004/050702
(87) Internationale Veröffentlichungsnummer: WO 2004/106199

(56) Entgegenhaltungen:
- EP-A- 0 362 120
- WO-A-87/04415
- US-A- 4 599 017

## Beschreibung

Die vorliegende Erfindung betrifft eine Vorrichtung zum kontinuierlichen Einspeisen eines pulverförmigen Feststoffs in eine pneumatische Förderleitung gemäß dem Oberbegriff des Anspruchs 1.

### Stand der Technik

Soll ein pulverförmiger Feststoff, u.a. Kohlenstaub, aus einem Vorratsbehälter kontinuierlich in eine pneumatische Förderleitung eingespeist werden, so werden nach Stand der Technik zwei unterschiedliche Einschleusungsverfahren eingesetzt.

Beim ersten Verfahren sind unter dem Vorratsbehälter zwei Zwischengefässe vertikal übereinander angeordnet. Das obere Zwischengefäß arbeitet als Schleusengefäß Es durchläuft periodisch folgenden Zyklus: (1) Befüllen des oberen Zwischengefäßes unter Umgebungsdruck mit pulverförmigem Feststoff aus dem Vorratsbehälter, (2) Abdichten des oberen Zwischengefäßes relativ zum Vorratsbehälter; (3) Unterdrucksetzen des oberen Zwischengefäßes; (4) Entleeren des unter Druck stehenden oberen Zwischengefaßes durch Schwerkraft in das untere Zwischengefäß; (5) Abdichten des oberen Zwischengefäßes relativ zum unteren Zwischengefäß, und (6) Druckentlasten des oberen Zwischengefäßes. Das untere Zwischengefäß arbeitet als Einblasgefäß, das stets unter Druck steht und aus dem der pulverförmige Feststoff kontinuierlich in die pneumatische Förderleitung eingespeist wird.

Beim zweiten Verfahren sind unter dem Vorratsbehälter zwei gleichartige Zwischengefäße nebeneinander angeordnet und parallel geschaltet. Diese Zwischengefäße arbeiten beide sowohl als Schleusengefäß und Einblasgefäß-Sie durchlaufen die gleichen Zyklen, jedoch zeitlich so versetzt, dass zu jedem Augenblick der pulverförmige Feststoff aus einem der beiden Gefäße kontinuierlich in die pneumatische Förderleitung eingeblasen wird, und das andere Zwischengefäß aus dem Vorratsbehälter nachgefüllt wird.

Die Serienschaltung mit Vertikalanordnung der Zwischengefässe kommt hauptsächlich zur Anwendung, wenn der pulverförmige Feststoff in eine größere Anzahl Förderleitungen einzutragen ist. Die Parallelschaltung mit Horizontalanordnung der Zwischengefässe wird hauptsächlich eingesetzt, wenn nur eine oder wenige Förderleitungen zu versorgen sind.

In der EP 0362120 ist eine Vorrichtung zur kontinuierlichen Schuttgutaufgabe in eine pneumatische Förderanlage mit einem Einschleusbehälter und einem Senderbehälter in Serienschaltung beschrieben. Der Einschleusbehälter ist über dem Senderbehälter angeordnet und sein Auslass mündet über ein Auslaufventil in den tieferliegenden Senderbehälter ein. Die Entleerung des Einschleusbehälter in den Senderbehälter wird durch einen Überdruck im Einschleusbehälter unterstützt.

In der US 4,599,017 ist eine Vorrichtung zum Versorgen von einer Mehrzahl von Verbraucherstationen mit einem Pulverförmigen Feststoff aus einer Förderleitung beschrieben. Die Förderleitung ist als Ringleitung mit einem Vorratsbehälter, einem Druckbehälter und je einem Zwischenbehälter pro Verbraucherstation ausgebildet. Der Vorratsbehälter ist augenscheinlich oberhalb des Druckbehälters angeordnet und entleert sich in diesen über ein Absperrventil. Das Einspeisen des pulverförmigen Feststoffs in die Förderleitung wird beim Nachfüllen Druckbehälters unterbrochen, so dass man nicht von einem kontinuierlichen Einspeisen des pulverförmigen Feststoffs in die Förderleitung ausgehen kann.

Die WO 87/04415 beschreibt eine Anlage zur Beförderung von Schüttgut auf einem Schiff. Diese Anlage umfasst mindestens einen Vorratsbehälter unter Deck, eine Aufladeeinheit auf dem Oberdeck des Schiffes, eine Transportleitung, welche den Vorratsbehälter mit der Aufladeeinheit verbindet, und eine Versorgungsleitung welche die Aufladeeinheit mit einer Entladestation verbindet. Die Aufladeeinheit umfasst mindestens zwei Aufladebehälter Abwechselnd kann ein Aufladebehälter durch die Transportleitung aufgefüllt und der andere Aufladebehälter durch die Versorgungsleitung entleert werden. Zum Auffüllen eines Aufladebehälter wird der Vorratsbehälter mit Druck beaufschlagt und der Aufladebehälter zur Atmosphäre entlastet, so dass der Transport des Schüttguts vom Vorratsbehälter in den höherliegenden Aufladebehälter pneumatisch erfolgt. Zum Entleeren eines Aufladebehälters wird letzterer mit einem höheren Druck beaufschlagt. Diese Vorrichtung braucht mindesterstens zwei parallelgeschaltete Aufladebehälter um ein kontinuierliches Einspeisen des Schüttguts in die Versorgungsleitung zu gewährleisten.

Sowohl die Serienschaltung, als auch die Parallelschaltung der Zwischengefäße weisen Nachteile auf.

Nachteilig bei der Serienschaltung mit Vertikalanordnung der Zwischengefässe sind z.B.:
- Die große Bauhöhe, wobei hervorzuheben ist, dass über den beiden Zwischengefäßen in Vertikalanordnung noch ein großer Vorratsbehälter anzuordnen ist
- Der vergleichsweise große Durchmesser der Verbindungsleitung (Fallleitung) zwischen dem unteren Auslauf des oberen Zwischengefäßes und dem oberen Einlauf in das untere Zwischengefäß. Der große Durchmesser ist erforderlich, um überhaupt einen Auslauf des Feststoffs unter Druck aus dem oberen Gefäß in das untere Gefäß bewirken zu können. Der große Durchmesser bedingt jedoch große und aufwändige Absperrarmaturen an Auslauf bzw. Einlauf der beiden Gefäße. Weiterhin ist anzumerken, dass die Absperrarmatur am Auslauf des oberen Schleusenbehälters beim Öffnen mit dem pulverförmigen Feststoff beaufschlagt ist, und sich das Öffnen umso schwieriger gestaltet je größer der Durchmesser der Absperrarmatur ist.
- Die erfahrungsgemäß relativ häufigen Störungen beim Schleusvorgang. In der Tat, durch das Unterdrucksetzen wird der Feststoff im Schleusenbehälter verfestigt, so dass es trotz des großen Auslaufdurchmessers und trotz des Einsatzes von Auflockerungseinrichtungen zu Verzögerungen, Unterbrechungen oder Aussetzen des Auslaufvorgangs kommen kann.

Als Nachteile der Parallelschaltung sind zu nennen:
- Jedes Zwischengefäß muss mit einer kompletten Auflockerungs- und Austragseinrichtungen zur Bildung eines Feststoff Fluid-Gemischs und zum Eintrag des Gemischs in die Förderleitung ausgestattet sein.
- Es ist nur mit großem Aufwand möglich, den pulverförmige Feststoff in mehrere Förderleitungen einzutragen.
- Die erfahrungsgemäß häufig auftretenden Schwankungen im Austragsmengenstrom, jedes Mal, wenn eine Umschaltung von einem Gefäß auf das zweite Gefäß erfolgt. Diese Schwankungen sind nur schwierig, mit großem Aufwand und nur unvollständig zu unterdrückenden.

### Aufgabe der Erfindung

Eine Aufgabe der vorliegenden Erfindung ist es, eine einfache Vorrichtung zum kontinuierlichen Einspeisen eines pulverförmigen Feststoffs in eine pneumatische Förderleitung zu schaffen, welche die vorbekannten Nachteile zumindest teilweise beseitigt. Diese Aufgabe wird durch eine Vorrichtung nach Anspruch 1 gelöst.

### Zusammenfassung der Erfindung

Eine erfindungsgemäße Vorrichtung zum kontinuierlichen Einspeisen eines pulverförmigen Feststoffs aus einem Vorratsbehälter in eine pneumatische Förderleitung, umfasst ein erstes und ein zweites Zwischengefäß. Das erste Zwischengefäß bildet ein Schleusengefäß mit einem oberen Schleusentor und einem unteren Schleusentor aus, wobei es über das obere Schleusentor aus dem Vorratsbehälter mit pulverförmigem Feststoff nachfüllbar und über das untere Schleusentor entleerbar ist. Das zweite Zwischengefäß bildet ein Einblasgefäß aus, mit einem oberen Einlauf zum Nachfüllen aus dem ersten Zwischengefäß und einer unteren Austragsöffnung zum kontinuierlichen Einspeisen des pulverförmigen Feststoffs in die pneumatische Förderleitung. Erfindungsgemäß sind das erste und zweite Zwischengefäß nebeneinander aufgestellt, wobei zwischen dem unteren Schleusentor des ersten Zwischengefäßes und dem oberen Einlauf des zweiten Zwischengefäßes eine pneumatische Zwischenförderung mit Fluidisierungsvorrichtung angeordnet ist, mittels welcher der pulverförmige Feststoff aus dem ersten Zwischengefäß in das zweite Zwischengefäß förderbar ist. Die Übergabe des pulverförmigen Feststoffs aus dem ersten Zwischengefäß in das zweite Zwischengefäß mittels pneumatischer Zwischenförderung mit Fluidisierungsvorrichtung vermeidet den Ausrüstungsaufwand und die Störanfälligkeit der Schwerkraftübergabe unter Druck. Aus dem zweiten, ständig unter Druck stehenden Zwischengefäß erfolgt der kontinuierliche Eintrag des Feststoff-Fluid-Gemischs in eine oder mehrere Förderleitungen. Die Auflockerungs- und Austragseinrichtungen sind nur einmal vorhanden, die durch das Umschalten zwischen den Gefäßen verursachten Mengenstromschwankungen bleiben aus. Es bleibt anzumerken, dass zur Durchführung der pneumatischen Zwischenförderung zwischen den beiden benachbarten Zwischenbehältern nur eine geringe Überhöhung des Drucks im ersten Zwischenbehälter erforderlich ist, und dass der daraus resultierende Mehrverbrauch an Druckgas, gegenüber dem Bedarf bei einer Übergabe unter Schwerkraft, ebenfalls bescheiden ist.

Für beide nebeneinander liegende Zwischengefäße wird vorteilhaft eine gemeinsame Vorrichtung zur Druckhaltung, bzw, eine gemeinsame Vorrichtung zur Druckentlastung eingesetzt.

Eine gemeinsame Vorrichtung zur Druckhaltung umfasst z.B.:
eine gemeinsame Gaseinspeisung;
ein Druckhalteregelventil in der gemeinsamen Gaseinspeisung;
einen ersten Anschluss mit einem ersten Absperrventil an das erste Zwischengefäß; und
einen zweiten Anschluss mit einem zweiten Absperrventil an das zweite Zwischengefäß.

Eine gemeinsame Vorrichtung zur Druckentlastung umfasst z.B.:
eine gemeinsame Gasentlastungsleitung;
ein Druckentiastungsregelventil in der gemeinsamen Gasentlastungsleitung;
einen ersten Anschluss mit einem ersten Absperrventil an das erste Zwischengefäß; und
einen zweiten Anschluss mit einem zweiten Absperrventil an das zweite Zwischengefäß.

Die für den Betrieb wesentlichen Einrichtungen zur Druckhaltung und Druckentlastung brauchen, da sie mit Hilfe von Absperrarmaturen zwischen beiden Gefäßen umschaltbar sind, jeweils nur einmal vorhanden zu sein. Erfolgt keine Feststoff-Übergabe vom ersten in das zweite Zwischengefäß, so hält die Druckhalteregelung im zweiten Zwischengefäß den für den einwandfreien Austrag des Feststoff-Fluid-Gemischs erforderlichen Überdruck. Während der pneumatischen Zwischenförderung des Feststoffs vom ersten in das zweite Zwischengefäß, hält die Druckhalteregelung den erforderlichen Überdruck im ersten Zwischengefäß, während die Druckentlastungsregelung das überschüssige Gas aus dem zweiten Zwischengefäß ableitet, um es z.B. über ein Filter in die Umgebung abzugeben. Ist der Zwischenfördervorgang beendet, wird die Druckentlastungsregelung zum Druckentlasten des ersten Zwischengefäßes eingesetzt.

Eine Einspeiseeinheit für Fluidisiergas umfasst vorteilhaft drei parallel geschaltete Stränge mit jeweils einem Absperrventil und einer Lavaldüse. Die Lavaldüse im ersten Strang soll dann ein Siebtel, die Lavaldüse im zweiten Strang zwei Siebtel und die Lavaldüse im dritten Strang vier Siebtel des maximal benötigten Gasdurchsatzes durchlassen. Die Durchflussmenge des Fluidisiergases kann somit in sechs gleich großen Stufen von 1/7 der maximalen Durchflussmenge auf 7/7 der maximalen Durchflussmenge erhöht werden. Es wird somit eine quasi kontinuierliche Regelung der Durchflussmenge des Fluidisiergases erzielt, ohne dass auf eine komplizierte Durchflussmengenmessung zurückgegriffen werden muss. Eine solche Gaseinspeiseeinheit umfasst vorteilhaft noch einen vierten Strang mit einem Absperrventil und einer Lavaldüse, der dann als Spülgasversorgung ausgelegt ist.

Die Fluidisierungsvorrichtung der pneumatischen Zwischenförderung umfasst vorteilhaft eine Fluidisierkammer mit einer Gaseinspeiseeinheit. Letztere weist vorteilhaft zwei parallel geschaltete Stränge mit jeweils einem Absperrventil und einer Lavaldüse auf, wobei einer der Stränge als Spülgasversorgung ausgelegt ist.

### Figurenaufstellung

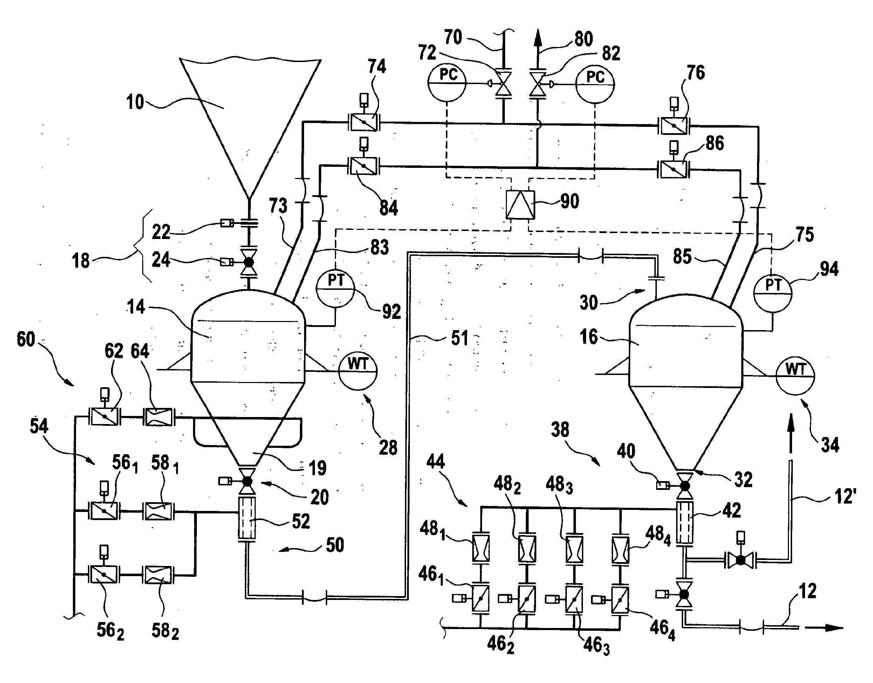

Im Folgenden wird nun eine Ausgestaltung der Erfindung anhand der beiliegenden Figur beschrieben. Es zeigt
Fig. 1: ein Schema einer erfindungsgemäßen Vorrichtung zum kontinuierlichen Einspeisen eines pulverförmigen Feststoffs aus einem Vorratsbehälter in eine pneumatische Förderleitung.

### Beschreibung einer bevorzugten Ausgestaltung der Erfindung anhand der Figuren

Mit dem Bezugszeichen 10 ist in Fig. 1 ein Vorratsbehälter bezeichnet in dem ein pulverförmiger Feststoff, wie z.B. Kohlenstaub, bevorratet wird. Dieser pulverförmige Feststoff soll kontinuierlich in mindestens eine pneumatische Förderleitung 12, 12' eingeblasen werden.

Die hierzu benutzte Vorrichtung umfasst ein erstes Zwischengefäß 14 und ein zweites Zwischengefäß 16 die in einer Ebene unterhalb des Vorratsbehälters 10 nebeneinander aufgestellt sind.

Das erste Zwischengefäß 14 ist als Schleusengefäß mit einem oberen Schleusentor 18, einem Auslaufkonus 19 und einem unteren Schleusentor 20 ausgebildet ist, wobei das erste Zwischengefäß 14 über das obere Schleusentor 18 aus dem Vorratsbehälter 10 mit pulverförmigem Feststoff nachfüllbar und über den Auslaufkonus 19 und das untere Schleusentor 20 entleerbar ist. Das obere Schleusentor 18 umfasst vorteilhaft einen Flachschieber 22 als Rückhalteorgan für den Feststoff im Vorratsbehälter 10 und ein darunter angeordnetes Kugelventil 24, das die Gasdichtheit gewährleistet. Das untere Schleusentor 20 umfasst ebenfalls ein Kugelventil das eine weitgehende Gasdichtheit gewährleistet- Das Bezugszeichen 28 bezeichnet eine erste Wägeinrichtung mit der sich der Füllstand des ersten Zwischengefäßes 14 ermitteln lässt.

Das zweite Zwischengefäß 16 ist als Einblasgefäß ausgebildet ist, mit einem oberen Einlauf 30 zum Nachfüllen aus dem, ersten Zwischengefäß 14 und einer unteren Austragsöffnung 32. Das Bezugszeichen 34 bezeichnet eine zweite Wägeinrichtung mit der sich der Füllstand des zweiten Zwischengefäßes 16 ermitteln lässt.

Mit dem Bezugszeichen 38 ist global eine Fluidisiereinrichtung bezeichnet die über ein Austragsventil 40 an die untere Austragsöffnung 32 des zweiten Zwischengefäßes 16 angeschlossen ist. Diese Fluidisiereinrichtung 38 umfasst eine an sich bekannte Fluidisierkammer 42 mit einer Gaseinspeiseeinheit 44. Letztere umfasst vorteilhaft vier parallel geschaltete Absperrventile 46₁, 46₂, 46₃, 46₄ mit jeweils einer nachgeschalteter Lavaldüse 48₁, 48₂, 48₃, 48₄ zur Begrenzung des Volumenstroms.

Mit dem Bezugszeichen 50 ist global eine pneumatische Zwischenförderung bezeichnet, die das Schleusentor 20 des ersten Zwischengefäßes 14 mit dem oberen Einlauf 30 des zweiten Zwischengefäßes 16 verbindet und den pulverförmige Feststoff aus dem ersten Zwischengefäß 14 in das zweite Zwischengefäß 16 fördert. Diese pneumatische Zwischenförderung 50 umfasst ebenfalls eine an sich bekannte Fluidisierkammer 52 mit einer Gaseinspeiseeinheit 54. Letztere umfasst vorteilhaft zwei parallel geschaltete Absperrventile 56₁, 56₂ mit jeweils einer nachgeschalteter Lavaldüse 58₁, 58₂ zur Begrenzung des Volumenstroms.

Eine zusätzliche Gaseinspeisung 60 ist im Auslaufkonus 19 des ersten Zwischengefäßes 14 untergebracht. Diese Gaseinspeisung ist ebenfalls ein Absperrventil 62 und eine Lavaldüse 64 ausgestattet.

Für beide Zwischengefäße 14 und 16 ist eine gemeinsame Vorrichtung zur Druckhaltung bzw. zur Druckentlastung vorgesehen. Die Vorrichtung zur Druckhaltung umfasst eine gemeinsame Gaseinspeisung 70 mit einem Regelventil 72 sowie einen ersten Anschluss 73 mit einem ersten Absperrventil 74 an das erste Zwischengefäß 14 und einen zweiten Anschluss 75 mit einem zweiten Absperrventil 76 an das zweite Zwischengefäß 16. Die Vorrichtung zur Druckhaltung umfasst eine gemeinsame Gasentlastungsleitung 80 mit einem Regelventil 82 sowie einen ersten Anschluss 83 mit einem ersten Absperrventil 84 an das erste Zwischengefäß 14 und einen zweiten Anschluss 85 mit einem zweiten Absperrventil 86 an das zweite Zwischengefäß 16.

Mit dem Bezugszeichen 90 ist ein Regler bezeichnet der sowohl das Druckhalteregelventil 72 als auch das Druckentlastungsregelventil 82 ansteuert. An diesen Regler 90 ist ein erster Druckaufnehmer 92 im ersten Zwischengefäß 14 und ein zweiter Druckaufnehmer 94 im zweiten Zwischengefäß 16 angeschlossen.

Nachfolgend wird nun die Funktionsweise der in Fig. 1 schematisch dargestellten Vorrichtung beschrieben.

Das erste Zwischengefäß 14 dient der pneumatischen Umschleusung des zu fördernden Stoffes aus dem Vorratsbehälter 10 in das zweite Zwischengefäß 16. Der zyklische Umschleusprozess beginnt mit dem Füllen des erste Zwischengefäßes 14 aus dem Vorratsbehälter 10. Hierzu wird das Kugelventil 24 und dann der Flachschieber 22 geöffnet. Unter Schwerkrafteinwirkung fließt der zu fördernde Stoff aus dem Vorratsbehälter 10 in das erste Zwischengefäß 14. Wird durch die Wägeinrichtung 28 festgestellt dass der maximale Füllstand im ersten Zwischengefäß 14 erreicht ist, so wird der Schieber 22 und dann das Kugelventil 24 geschlossen. Das Absperrventil 84 in der Druckentlastungsleitung 83, das bis jetzt geöffnet war, wird nun geschlossen. Durch Öffnen des Absperrventils 62 wird das erste Zwischengefäß, 14 unter Druck gesetzt Die Lavaldüse 64 begrenzt die Durchflussmenge. Wird durch den Druckaufnehmer 92 das Erreichen des Einblasdrucks festgestellt, wird das Ventil 62 wiederum geschlossen.

Bei Erreichen eines minimalen Füllstandes im zweiten Zwischengefäß 16 wird die pneumatische Zwischenförderung 50 gestartet. Hierzu wird das Absperrventil 56₁ der Gaseinspeiseeinheit 54 und anschließend das untere Schleusentor 20 des ersten Zwischenbehälters 14 geöffnet. In der Fluidisierkammer 52 vermischt sich das Fluidisiergas mit dem Feststoffstrom. Die Lavaldüse 58₁ begrenzt die Durchflussmenge des Fluidisiergases. Das Fluid-Feststoff-Gemisch wird durch die pneumatische Zwischenförderung 50 zum oberen Einlauf 30 des zweiten Zwischenbehälters 16 transportiert. Ober das Druckhalteregelventil 72 wird bei der Zwischenförderung der Druck im ersten Zwischengefäß konstant gehalten. Hierbei ist das Absperrventil 76 geschlossen und das Absperrventil 74 geöffnet, und der Regler 90 regelt das Druckhalteregelventil 72 in Funktion der Messwerte des ersten Druckaufnehmers 92.

Nach Erreichen eines minimalen Füllstandes im ersten Zwischengefäß 14 wird das unter Schleusentor 20 des ersten Zwischengefäßes 14 geschlossen. Die pneumatische Zwischenförderung 50 wird durch Öffnen des Spülventils 56₂ gespült. Die Lavaldüse 58₂ definiert die Durchflussmenge des Spülgases.

Nach Durchspülung der pneumatischen Zwischenförderung 50 werden die Absperrventile 56₁, 56₂ geschlossen, Das Druckhalteventil 72 wird jetzt auf das zweite Zwischengefäß 16 geschaltet. Dies geschieht durch Schließen des Ventils 74 und Öffnen des Ventils 76. Das Druckentlastungsregelventil 82 wird hingegen auf das erste Zwischengefäß 14 geschaltet. Dies geschieht durch Schließen des Ventils 86 und Öffnen des Ventils 84. Durch Öffnen des Druckentlastungsregelventils 82 kann nun das erste Zwischengefäß 14 entspannt werden. Die Öffnung des Druckentlastungsregelventils 82 wird in Abhängigkeit vom verbleibenden Druck (Druckaufnehmer 92) im ersten Zwischengefäß 14 so gefahren, dass die Durchflussmenge über einen weiten Bereich ungefähr konstant bleibt. Das entspannte erste Zwischengefäß 14 wird gewogen und der Zyklus beginnt von vorne.

Aus dem zweiten Zwischengefäß 16 wird der zu pulverförmige Feststoff kontinuierlich in mindestens eine der beiden pneumatischen Förderleitungen 12, 12' eingebracht. Hierzu ist das Austragsventil 40 geöffnet und der ausströmende Feststoff wird in der Fluidisierkammer 42 mit einem Fördergas vermischt. Das Fördergas wird von Gaseinspeiseeinheit 44 in die Fluidisierkammer 42 eingespeist. In Abhängigkeit des zum Transport erforderlichen Gasdurchsatzes sind eins, zwei oder drei der Absperrventile 46₁, 46₂, 46₃ geöffnet. Die Lavaldüsen 48₁, 48₂, 48₃ begrenzen die Durchflussmenge. Sie sind dimensioniert, dass die Lavaldüse 48₁ ein Siebtel (1/7), die Lavaldüse 48₂ zwei Siebtel (2/7), und die Lavaldüse 48₃ vier Siebtel (4/7) des maximal benötigten Gasdurchsatzes durchlässt. Die Durchflussmenge des Fluidisiergases kann somit in sechs gleich großen Stufen von 1/7 der maximalen Durchflussmenge auf 7/7 der maximalen Durchflussmenge erhöht werden. Es wird somit eine quasi kontinuierliche Dosierung der Durchflussmenge des Fluidisiergases erzielt, ohne dass auf eine komplizierte Durchflussmengenmessung zurückgegriffen werden muss.

Die Einblasleitung kann im Falle einer Unterbrechung oder einer Verstopfung gespült werden. Dies geschieht durch Schließen der Absperrventile 46₁, 46₂, 46₃ und Öffnen des Absperrventils 46₄. Die Lavaldüse 48₄ legt die Spüldurchflussmenge fest

Während des Einblasens wird der Druck im zweiten Zwischengefäß 16 konstant gehalten. Hier sind zwei Betriebszustände ist zu unterscheiden ob die pneumatische Zwischenförderung 50 fördert oder nicht.

Falls die pneumatische Zwischenförderung 50 nicht fördert, ist das Druckhalteregelventil 72 auf das zweite Zwischengefäß 16 geschaltet, d.h. das Absperrventil 74 ist geschlossen und das Absperrventil 76 ist geöffnet. Über den Regelkreis zwischen dem Druckaufnehmer 94 und dem Druckhalteregelventil 72 wird der Druck im zweiten Zwischengefäß 16 konstant gehalten. Detektiert die Wägeinrichtung 34 einen minimalen Füllstand im zweiten Zwischengefäß 16, so wird die pneumatische Zwischenförderung 50 eingeschaltet. Durch Schließen des Absperrventils 76 und Öffnen des Absperrventils 74 wird das Druckhalteregelventil 72 auf das erste Zwischengefäß 14 umgeschaltet.

Falls die pneumatische Zwischenförderung 50 fördert, gelangt mehr Feststoff und Fördergas in das zweite Zwischengefäß 16 als durch den Einblasprozess aus dem zweiten Zwischengefäß 16 abgezogen wird. Der Druck im zweiten Zwischengefäß 16 wird dann durch kontrolliertes Ablassen einer bestimmten Gasmenge konstant gehalten. Hierfür wird das Druckentlastungsregelventil 82 auf das zweite Zwischengefäß 16 geschaltet, d.h. das Absperrventil 84 wird geschlossen und das Absperrventil 86 wird geöffnet. Über den Regelkreis zwischen dem Druckaufnehmer 94 und dem Druckablassregelventil 82 wird der Druck im zweiten Zwischengefäß 16 konstant gehalten. Nach Abschluss des Auffüllvorgangs des zweiten Zwischengefäßes 16 und Durchspülen der pneumatischen Zwischenförderung 50, wird das Druckablassregelventil 82 wieder auf das erste Zwischengefäß 14 geschaltet (d.h. das Absperrventil 84 wird geöffnet und das Absperrventil 86 wird geschlossen) und das Druckhalteregelventil 72 wird wieder auf das zweite Zwischengefäß 16 geschaltet (d.h. das Absperrventil 76 wird geöffnet und das Absperrventil 74 wird geschlossen), so dass nun wieder der erste Betriebszustand vorliegt.

### Bezugszeichenliste

| Vorratsbehälter 10 | Gaseinspeiseeinheit 54 |
|---|---|
| pneumatische Förderleitung 12, 12' | Absperrventile 56₁, 56₂ |
| erstes Zwischengefäß 14 | Lavaldüse 58₁, 58₂ |
| zweites Zwischengefäß 16 | Gaseinspeisung 60 |
| oberes Schleusentor 18 | Absperrventil 62 |
| Auslaufkonus 19 | Lavaldüse 64 |
| unteres Schleusentor 20 | Gaseinspeisung 70 |
| Flachschieber 22 | Druckhalteregelventil 72 |
| Kugelventil 24 | erster Anschluss 73 |
| erste Wägeinrichtung 28 | erstes Absperrventil 74 |
| oberer Einlauf 30 | zweiter Anschluss 75 |
| zweite Wägeinrichtung 34 | zweites Absperrventil 76 |
| Fluidisierungseinrichtung 38 | Gasentlastungsleitung 80 |
| Austragsventil 40 | Druckentlastungsregelventil 82 |
| Fluidisierungskammer 42 | erster Anschluss 83 |
| Gaseinspeiseeinheit 44 | erstes Absperrventil 84 |
| Absperrventile 46₁, 46₂, 46₃, 46₄ | zweiter Anschluss 85 |
| Lavaldüse 48₁, 48₂, 48₃. 48₄ | zweites Absperrventil 86 |
| pneumat. Zwischenförderung 50 | Regler 90 |
| Förderleitung 51 | erster Druckaufnehmer 92 |
| Fluidisierungskammer 52 | zweiter Druckaufnehmer 94 |

## Patentansprüche

1. Vorrichtung zum kontinuierlichen Einspeisen eines pulverförmigen Feststoffs aus einem Vorratsbehälter (10) in eine pneumatische Förderleitung (12, 12'), umfassend:
ein erstes Zwischengefäß (14), das als Schleusengefäß mit einem oberen Schleusentor (18) und einem unteren Schleusentor (20) ausgebildet ist,
wobei das erste Zwischengefäß (14) über das obere Schleusentor (18) aus dem Vorratsbehälter (10) mit pulverförmigem Feststoff nachfüllbar und über das untere Schleusentor (20) entleerbar ist; und
ein zweites Zwischengefäß (16), das als Einblasgefäß ausgebildet ist, mit einem oberen Einlauf (30) zum Nachfüllen aus dem ersten Zwischengefäß (16) und einer unteren Austragsöffnung (32) zum kontinuierlichen Einspeisen des pulverförmigen Feststoffs in die pneumatische Förderleitung (12, 12');
**dadurch gekennzeichnet, dass**
das erste und zweite Zwischengefäß (14 und 16) nebeneinander aufgestellt sind, und
zwischen dem unteren Schleusentor (20) des ersten Zwischengefäßes (14) und dem oberen Einlauf (30) des zweiten Zwischengefäßes (16) eine pneumatische Zwischenförderung (50) mit Fluidisierungsvorrichtung angeordnet ist, mittels welcher der pulverförmige Feststoff aus dem ersten Zwischengefäß (14) in das zweite Zwischengefäß (16) förderbar ist.

2. Vorrichtung nach Anspruch 1, umfassend eine gemeinsame Vorrichtung (70, 72, 73, 74, 75, 76) zur Druckhalkung in beiden Zwischengefäßen (14, 16).

3. Vorrichtung nach Anspruch 2, wobei die gemeinsame Vorrichtung zur Druckhaltung umfasst:
eine gemeinsame Gaseinspeisung (70);
ein Druckhalteregelventil (72) in der gemeinsamen Gaseinspeisung (70);
einen ersten Anschluss (73) mit einem ersten Absperrventil (74) an das erste Zwischengefäß (14); und
einen zweiten Anschluss (75) mit einem zweiten Absperrventil (76) an das
zweite Zwischengefäß (16).

4. Vorrichtung nach einem der Ansprüche 2 und 3, umfassend eine gemeinsame Vorrichtung zur Druckentlastung mit:
einer gemeinsamen Gasentlastungslertung (80);
einem Druckentlastungsregelventil (82) in der gemeinsamen Gasentlastungsleitung (80);
einem ersten Anschluss (83) mit einem ersten Absperrventil (84) an das erste Zwischengefäß (14); und
einem zweiten Anschluss (85) mit einem zweiten Absperrventil (86) an das
zweite Zwischengefäß (16).

5. Vorrichtung nach einem der Ansprüche 3 und 4, umfassend einen Regler (90) der sowohl das Druckhalteregelventil als auch das Druckentlastungsregelventil ansteuert.

6. Vorrichtung nach einem der Ansprüche 1 bis 5, umfassend eine Fluidisiereinrichtung (38) die an eine untere Austragsöffnung (32) des zweiten Zwischengefäßes (16) angeschlossen ist und eine Fluidisierkammer (42) mit einer Gaseinspeiseeinheit (44) aufweist.

7. Vorrichtung nach Anspruch 6, wobei:
die Gaseinspeiseeinheit (44) drei parallel geschaltete Stränge mit jeweils einem Absperrventil (46₁, 46₂, 46₃) und einer Lavaldüse (48₁, 48₂, 48₃) umfasst, und die Lavaldüse (48₁) im ersten Strang ein Siebtel, die Lavaldüse (48₂) im zweiten Strang zwei Siebtel und die Lavaldüse (48₃) im dritten Strang vier Siebtel des maximal benötigten Gasdurchsatzes durchlässt.

8. Vorrichtung nach Anspruch 7, wobei die Gaseinspeiseeinheit einen vierten Strang mit einem Absperrventil (46₄) und einer Lavaldüse (48₄) umfasst, und dieser vierte Strang als Spülgasversorgung ausgelegt ist.

9. Vorrichtung nach einem der Ansprüche 1 bis 7, wobei:
die Fluidisierungsvorrichtung eine Fluidisierkammer (52) mit einer Gaseinspeiseeinheit (54) aufweist, und
die Gaseinspeiseeinheit (54) zwei parallel geschaltete Stränge mit jeweils einem Absperrventil (56₁, 56₂) und einer Lavaldüse (58₁, 58₂) umfasst, wobei einer der Stränge als Spülgasversorgung ausgelegt ist.

## Claims

1. Device for continuously feeding a powdery solid from a storage container (10) into a pneumatic conveying line (12,12'), comprising:
a first intermediate vessel (14) taking the form of a lock chamber with an upper shut-off valve (18) and a lower shut-off valve (20), such that the intermediate vessel (14) can be filled with powdery solid from the storage container (10) through the upper shut-off valve (18) and emptied through the lower shut-off valve (20); and
a second intermediate vessel (16) taking the form of an injection chamber with an upper inlet (30) for filling the second intermediate vessel (16) and a lower delivery opening (32) for continuously feeding the powdery solid into the pneumatic conveying line (12,12');
**characterized in that**
the first and second intermediate vessels (14 and 16) are arranged side by side, and
between the lower shut-off valve (20) of the first intermediate vessel (14) and the upper inlet (30) of the second intermediate vessel (16), a pneumatic intermediate conveying line (50) with a fluidization unit is arranged, by means of which the powdery solid can be conveyed out of the first intermediate vessel (14) into the second intermediate vessel (16).

2. Device according to Claim 1, comprising a common device (70, 72, 73, 74, 75, 76) for maintaining the pressure in both intermediate vessels (14,16).

3. Device according to Claim 2, wherein the common device for pressure maintenance comprises:
a common gas feed (70);
a regulator valve (72) in the common gas feed (70);
a first connection (73) with a first shut-off valve (74) to the first intermediate vessel (14); and
a second connection (75) with a second shut-off valve (76) to the second intermediate vessel (16)

4. Device according to either of Claims 2 or 3, comprising a common device for pressure release with
a common gas pressure release line (80);
a pressure release regulator valve (82) in the common gas pressure release line (80);
a first connection (83) with a first shut-off valve (84) to the first intermediate vessel (14); and
a second connection (85) with a second shut-off valve (86) to the second intermediate vessel (16)

5. Device according to either of Claims 3 or 4, comprising a regulator (90) that controls both the pressure maintenance regulator valve and the pressure release regulating valve

6. Device according to any one of Claims 1 to 5, comprising a fluidization device (38) which is connected to a lower outlet opening (32) of the second intermediate vessel (16) and displays a fluidization chamber (42) with a gas feed unit (44)

7. Device according to Claim 6, wherein
the gas feed unit (44) comprises three branches in parallel, each having a shut-off valve (46₁, 46₂, 46₃) and a Laval nozzle (48₁, 48₂, 48₃), and the Laval nozzle (48₁) in the first branch passes one seventh, the Laval nozzle (48₂) in the second branch two sevenths, and the Laval nozzle (48₃) in the third branch four sevenths of the maximum gas throughput required.

8. Device according to Claim 7, wherein:
the gas feed unit comprises a fourth branch with a shut-off valve (48₄) and a fourth Laval nozzle (48₄), and this fourth branch is designed as a flushing gas supply

9. Device according to any one of Claims 1 to 7, wherein:
the fluidization unit displays a fluidization chamber (52) with a gas feed unit (54), and
the gas feed unit (54) comprises two branches connected in parallel, each with a shut-off valve (56₁, 56₂) and a Laval nozzle (58₁, 58₂), one of the branches being designed as a flushing gas supply

## Revendications

1. Dispositif pour l'injection continue d'une matière solide pulvérulente à partir d'un réservoir de stockage (10) dans une conduite de transport (12, 12') pneumatique comprenant
un premier récipient intermédiaire (14), qui est conçu comme récipient à sas avec une porte à sas (18) supérieure et une porte à sas (20) inférieure, le premier récipient intermédiaire (14) pouvant être rechargé avec de la matière pulvérulente par la porte à sas (18) supérieure à partir du récipient du réservoir de stockage (10) et pouvant être vidéé par la porte à sas (20) inférieure, et
un second récipient intermédiaire (16), qui est conçu comme récipient d'injection, comprenant une entrée (30) supérieure pour le rechargement à partir du premier récipient intermédiaire (16) et une ouverture d'évacuation (32) inférieure pour l'injection continue de la matière solide pulvérulente dans la conduite de transport (12, 12') pneumatique,
**caractérisé en ce que**
le premier et le second récipients intermédiaires (14 et 16) sont installés l'un à côté de l'autre, et
entre la porte à sas (20) inférieure du premier récipient intermédiaire (14) et l'entrée (30) supérieure du second récipient intermédiaire (16) est disposée une conduite de transport intermédiaire (50) pneumatique avec dispositif de fluidification, au moyen duquel la matière solide pulvérulente peut être transportée du premier récipient intermédiaire (14) dans le second récipient intermédiaire (16)

2. Dispositif selon la revendication 1, comprenant un dispositif (70, 72, 73, 74, 75, 76) commun de maintien sous pression dans les deux récipients intermédiaires (14, 16)

3. Dispositif selon la revendication 2, le dispositif commun pour le maintien sous pression comprenant :
une injection de gaz (70) commune,
une vanne régulatrice de maintien sous pression (72) dans l'injection de gaz (70) commune ;
un premier raccordement (73) avec une première vanne d'arrêt (74) sur le premier récipient intermédiaire (14), et
un second raccordement (75) avec une seconde vanne d'arrêt (76) sur le second récipient intermédiaire (16)

4. Dispositif selon l'une quelconque des revendications 2 et 3, comprenant un dispositif commun pour la décharge de pression avec
une conduite commune de décharge de gaz (80),
une vanne régulatrice de décharge de pression (82) dans la conduite commune de décharge de gaz (80),
un premier raccordement (83) avec une première vanne d'arrêt (84) sur le premier récipient intermédiaire (14), et
un second raccordement (85) avec une seconde vanne d'arrêt (86) sur le second récipient intermédiaire (16).

5. Dispositif selon l'une quelconque des revendications 3 et 4, comprenant un régulateur (90) qui active aussi bien la vanne régulatrice de maintien de pression que la vanne régulatrice de décharge de pression.

6. Dispositif selon l'une quelconque des revendications 1 à 5, comprenant un dispositif de fluidification (38), qui est raccordé à une ouverture d'évacuation (32) inférieure du second récipient intermédiaire (16) et présente une chambre de fluidification (42) avec une unité d'injection (44)

7. Dispositif selon la revendication 6, l'unité d'injection de gaz (44) comprenant trois branches montées en parallèle présentant chacune une vanne d'arrêt (46₁, 46₂, 46₃), et une buse de Laval (48₁, 48₂, 48₃), et la buse de Laval (48₁) dans la première branche laissant passer un septième, la buse de Laval (48₂) dans la seconde branche deux septièmes et la buse de Laval (48₃) dans la troisième branche quatre septièmes du débit de gaz maximal utilisé.

8. Dispositif selon la revendication 7, l'unité d'injection de gaz comprenant une quatrième branche avec une vanne d'arrêt (46₄) et une buse de Laval (48₄), et cette quatrième branche étant conçue comme alimentation en gaz de lavage

9. Dispositif selon l'une quelconque des revendications 1 à 7, le dispositif de fluidification présentant une chambre de fluidification (52) avec une unité d'injection de gaz (54), et l'unité d'injection de gaz (54) comportant deux branches montées en parallèle comprenant chacune une vanne d'arrêt (56₁, 56₂) et une buse de Laval (58₁, 58₂), l'une des branches étant conçue comme alimentation en gaz de lavage
